(19) Europäisches Patentamt
European Patent Office
Office européen des brevets

(11) **EP 4 040 866 A1**

(12) **EUROPEAN PATENT APPLICATION**
published in accordance with Art. 153(4) EPC

(43) Date of publication:
**10.08.2022 Bulletin 2022/32**

(21) Application number: **19947503.9**

(22) Date of filing: **03.10.2019**

(51) International Patent Classification (IPC):
***H04W 56/00*** *(2009.01)*

(52) Cooperative Patent Classification (CPC):
**H04W 56/00**

(86) International application number:
**PCT/JP2019/039207**

(87) International publication number:
**WO 2021/064965 (08.04.2021 Gazette 2021/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Chiyoda-ku**
**Tokyo 100-6150 (JP)**

(72) Inventors:
- **KURITA Daisuke**
  **Tokyo 100-6150 (JP)**
- **HARADA Hiroki**
  **Tokyo 100-6150 (JP)**
- **KUMAGAI Shinya**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL**

(57)    A terminal receives a synchronization signal block from a radio base station and calculates a quasi co-location associated with the synchronization signal block. The terminal applies a different calculation method of the quasi co-location according to the number of synchronization signal blocks included in a slot.

## FIG. 10

**Description**

Technical Field

The present invention relates to a terminal that executes radio communication, and particularly to a terminal that uses an unlicensed frequency band.

Background Art

The 3rd generation partnership project (3GPP) has specified long term evolution (LTE), and has also advanced specification for LTE-Advanced (hereinafter referred to as LTE including LTE-Advanced) for the purpose of further speeding up LTE, and 5th generation mobile communication system (also called 5G, new radio (NR), or next generation (NG)).

For example, also in the NR, new radio-unlicensed (NR-U) that expands a usable frequency band using a spectrum of an unlicensed frequency band has been studied (Non Patent Literature 1), similar to the LTE.

In addition, regarding an initial access in the NR-U, relevance of a quasi co-location (QCL) between SS/PBCH blocks (SSBs) including a synchronization signal (SS) and a downlink physical broadcast channel (PBCH) has been studied (Non Patent Literature 2).

Among them, it has been agreed that a terminal (user equipment (UE)) assume relevance of a QCL between SSBs within a discovery reference signal (DRS) transmission or measurement window, or across the measurement window, when a predetermined condition is satisfied.

Citation List

Non Patent Literature

Non Patent Literature 1: 3GPP TR 38.889 V16.0.0, 3rd Generation Partnership Project; Technical Specification Group Radio Access Network; Study on NR-based access to unlicensed spectrum (Release 16), 3GPP, December 2018
Non Patent Literature 2: "Feature lead summary #1 of Enhancements to initial access procedure", R1-1909454, 3GPP TSG RAN WG1 Meeting #98, 3GPP, August 2019

Summary of Invention

However, the assumption of the relevance of the QCL by the terminal described above has the following problem. Specifically, when only one SSB is allocated in a slot including a predetermined number of symbols, a case where different QCLs cannot be allocated to SSBs transmitted from a radio base station (gNB) can occur.

That is, according to the number of SSBs transmitted in the slot, a case where different QCLs cannot always be allocated can occur.

Therefore, the present invention has been made in view of such a situation, and an object of the present invention is to provide a terminal capable of assuming allocation of a quasi co-location (QCL) that is always different for each SSB, regardless of the number of SSBs transmitted in a slot even in a case of new radio-unlicensed (NR-U) that uses an unlicensed frequency band.

An aspect of the present disclosure is a terminal (UE 200) including: a reception unit (radio signal transmission/reception unit 210) that receives a synchronization signal block (SSB) from a radio base station (gNB 100); and a control unit (control unit 270) that calculates a quasi co-location (QCL) associated with the synchronization signal block, in which the control unit applies a different calculation method of the quasi co-location according to the number of synchronization signal blocks included in a slot.

Brief Description of Drawings

Fig. 1 is an overall schematic configuration diagram of a radio communication system 10.
Fig. 2 is a diagram illustrating a configuration example of a radio frame, a subframe, and a slot used in the radio communication system 10.

Fig. 3 is a diagram illustrating a configuration example of a synchronization signal block (SSB).

Fig. 4 is an explanatory diagram of a relationship between an allocation example of the SSB and a beam BM on a radio frame according to 3GPP Release 15.

Fig. 5 is a functional block diagram of UE 200.

Fig. 6 is a diagram illustrating an example of a correspondence relationship between SSBs and QCLs (Q) in NR-U.

Fig. 7 is a diagram illustrating another example of a correspondence relationship between SSBs and QCLs (Q) in NR-U.

Fig. 8 is a diagram illustrating a calculation flow of a QCL according to operation example 1.

Fig. 9 illustrates a calculation flow of a QCL according to operation example 2.

Fig. 10 is a diagram illustrating an example (corresponding to Equation 2'-1) of a correspondence relationship between SSBs and QCLs (Q) according to operation example 2.

Fig. 11 is a diagram illustrating an example (corresponding to Equation 2'-2) of a correspondence relationship between SSBs and QCLs (Q) according to operation example 2.

Fig. 12 is a diagram illustrating an example of a hardware configuration of the UE 200.

Description of Embodiments

Hereinafter, embodiments will be described with reference to the drawings. Note that the same functions or configurations will be denoted by the same or similar reference numerals, and a description thereof will be appropriately omitted.

(1) Overall schematic configuration of radio communication system

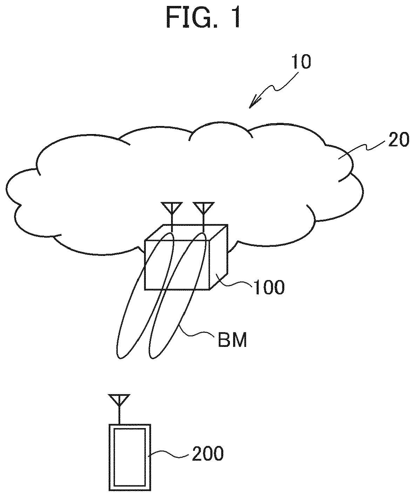

Fig. 1 is an overall schematic configuration diagram of a radio communication system 10 according to the present embodiment. The radio communication system 10 is a radio communication system according to 5G new radio (NR), and includes a next generation-radio access network 20 (hereinafter, referred to as NG-RAN 20) and a terminal 200 (hereinafter, referred to as UE 200).

The NG-RAN 20 includes a radio base station 100 (hereinafter, referred to as gNB 100). Note that a specific configuration of the radio communication system 10 including the numbers of gNBs and UEs is not limited to an example illustrated in Fig. 1.

The NG-RAN 20 actually includes a plurality of NG-RAN nodes, specifically, gNBs (or ng-eNBs), and is connected to a core network (5GC) (not illustrated) according to 5G. Note that the NG-RAN 20 and the 5GC may be simply expressed as "networks".

The gNB 100 is a radio base station according to 5G, and executes radio communication according to 5G with the UE 200. The gNB 100 and the UE 200 can support massive multiple-input multiple-output (MIMO) that generates beams BM with higher directivity, carrier aggregation (CA) that bundles and uses a plurality of component carriers (CCs), dual connectivity (DC) that simultaneously performs communication between the UE and each of two NG-RAN nodes, and the like, by controlling radio signals transmitted from a plurality of antenna elements.

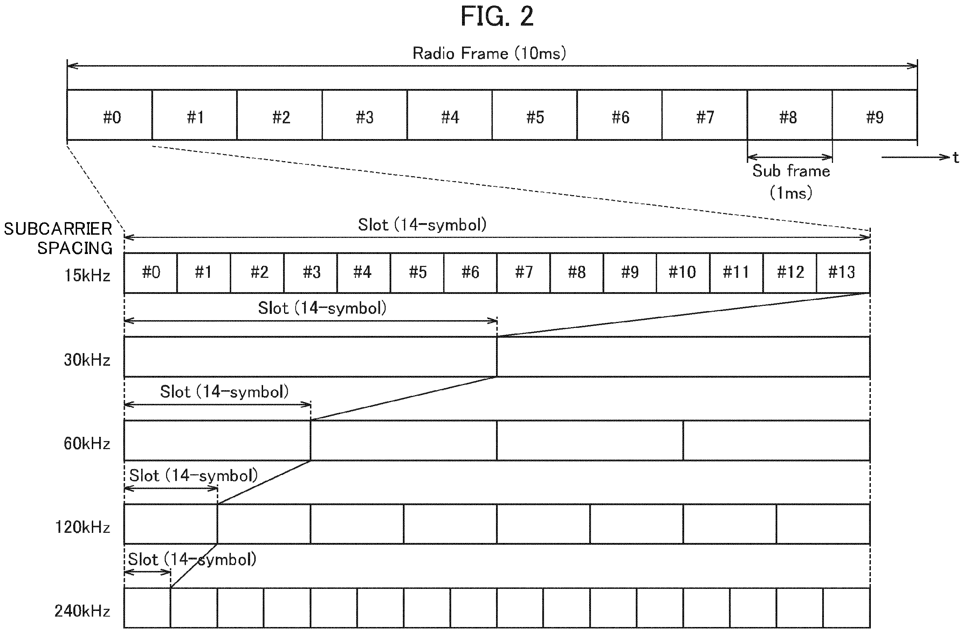

The radio communication system 10 supports a plurality of frequency ranges (FRs). Fig. 2 illustrates a configuration example of a radio frame, a subframe, and a slot used in the radio communication system 10.

Specifically, the radio communication system 10 supports FR1 and FR2. Frequency bands of each FR are as follows.

- FR1: 410 MHz to 7.125 GHz
- FR2: 24.25 GHz to 52.6 GHz

In FR1, a sub-carrier spacing (SCS) of 15, 30, or 60 kHz is used and a bandwidth (BW) of 5 to 100 MHz is used. FR2 has a higher frequency than FR1, and in FR2, an SCS of 60 or 120 kHz (240 kHz may be included) may be used and a bandwidth of 50 to 400 MHz (BW) is used.

Furthermore, the radio communication system 10 may support a higher frequency band than a frequency band of FR2. For example, the radio communication system 10 can support a frequency band exceeding 52.6 GHz and up to 114.25GHz.

In addition, in the radio communication system 10, in addition to a frequency band allocated for the radio communication system 10, an unlicensed frequency band Fu different from the frequency band is also used. Specifically, in the radio communication system 10, new radio-unlicensed (NR-U) that extends a usable frequency band using a spectrum of the unlicensed frequency band can be executed.

The frequency band allocated for the radio communication system 10 is a frequency band included in the frequency ranges of FR1 and FR2 described above and based on license allocation by government.

The unlicensed frequency band Fu is a frequency band that does not require license allocation by the government and is usable without being limited to a specific communication carrier. Examples of such an unlicensed frequency band can include a frequency band for a wireless LAN (WLAN) (such as 2.4 GHz or 5 GHz band).

In the unlicensed frequency band Fu, radio stations can be installed without being limited to being installed by a specific communication carrier, but it is not desirable that signals from nearby radio stations interfere with each other to significantly deteriorate communication performance.

For this reason, for example, in Japan, as a requirement for a radio system that uses the unlicensed frequency band Fu (for example, a 5 GHz band), a mechanism of Listen-Before-Talk (LBT) in which the gNB 100 executes carrier sense before starting transmission, and enables transmission within a predetermined time length only when the gNB 100 could confirm that a channel is not used by another system in the vicinity is applied. Note that the carrier sense is a technology for confirming whether or not a frequency carrier is used for other communication before emitting a radio wave.

The gNB 100 performs the carrier sense, and transmits a reference signal (RS) for radio link monitoring (RLM), specifically, an RLM-RS, to a cell formed by the gNB 100 when the gNB 100 could confirm that the channel is not used by another system in the vicinity.

The RLM-RS may include a discovery reference signal (DRS), synchronization signal/physical broadcast channel blocks (SS/PBCH blocks: SSB), and a channel state information-RS (CSI-RS). In addition, the DRS may include a CSI-RS, remaining minimum system information-control resource sets (RMSI-CORSET), or a physical downlink shared channel (PDSCH) associated with the SSB.

The RMSI-CORESET is control resource sets (CORESET) (may be referred to remaining minimum system information (RMSI) CORESET) for a Type0-PDCCH common search space (CSS) set, and the UE 200 determines several consecutive resource blocks (RB) and symbols for the RMSI CORESET and configures a monitoring opportunity (MO) of a physical downlink control channel (PDCCH), specifically, a Type 0 PDCCH for decoding a system information block (SIB), based on the determined RB and symbols.

In addition, the UE 200 determines the number of consecutive resource blocks (RB), the number of consecutive symbols, and the like of the RMSI CORESET from the four most significant bits (controlResourceSetZero) of pdcch-ConfigSIB1 included in a master information block (MIB) and determines a cycle, a timing or the like of the monitoring opportunity (MO) of the PDCCH (including the Type 0 PDCCH) from the four least significant bits (searchSpaceZero) of pdcch-ConfigSIB1 included in the MIB, as illustrated in Tables 13-1 to 13-10 described in 3GPP TS38.213 v15/13 chapter. Note that pdcch-ConfigSIB1 may be referred to as RMSI-PDCCH-Config, or the like.

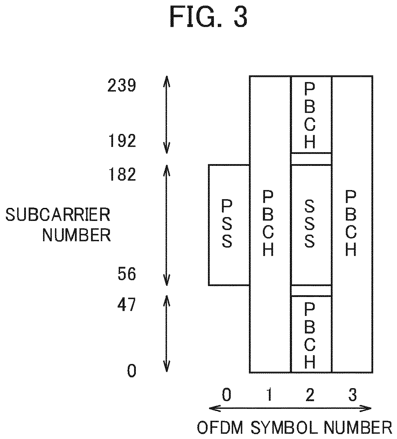

Fig. 3 illustrates a configuration example of a synchronization signal block (SSB). As illustrated in Fig. 3, the SSB includes a synchronization signal (SS) and a downlink physical broadcast channel (PBCH).

The SS includes a primary synchronization signal (primary SS (PSS)) and a secondary synchronization signal (SSS).

The PSS is a known signal that the UE 200 attempts to first detect in a cell search procedure. The SSS is a known signal transmitted in order to detect a physical cell ID in the cell search procedure.

The PBCH includes information necessary for the UE 200 to establish frame synchronization with an NR cell formed by the gNB 100 after detecting the SS/PBCH block, such as a system frame number (SFN) and an index for identifying symbol positions of a plurality of SS/PBCH blocks within a half frame (5 ms).

In addition, the PBCH can also include a system parameter required to receive system information (SIB). Furthermore, the SSB also includes a broadcast channel demodulation reference signal (DMRS for PBCH). The DMRS for PBCH is a known signal transmitted in order to measure a radio channel state for PBCH demodulation.

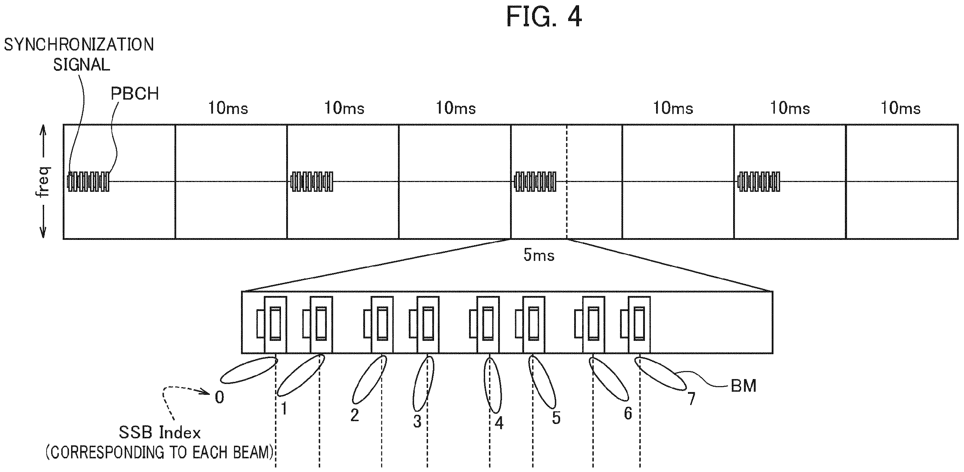

Fig. 4 is an explanatory diagram of a relationship between an allocation example of the SSB and a beam BM on a radio frame according to 3GPP Release 15. As described above, the SSB, specifically, the synchronization signal (PSS/SSS) and the PBCH illustrated in Fig. 3 are transmitted within any one (5 milliseconds) of the first half frame or the latter half frame of each radio frame (Fig. 4 is an example of transmission in the first half frame). In addition, the terminal assumes that each SSB is associated with a different beam BM. That is, the terminal assumes that each SSB is associated with a beam BM having a different transmission direction (coverage) (assumes quasi co-location). Therefore, the UE 200 residing in the NR cell can receive any beam BM, acquire the SSB, and start initial access and SSB detection/measurement.

Note that a transmission pattern of the SSB varies depending on an SCS, a frequency range (FR), or other parameters.

The NR-U is different from Release 15 in the following points. Specifically, transmission candidate positions of the SSBs are one frame (10 milliseconds). Therefore, the transmission candidate positions of the SSBs are #10 (when SCS = 15 kHz, see an upper part of Fig. 2) and #20 (when SCS = 30 kHz).

In addition, the number of SSBs that are actually transmitted is the number of SSBs that are continuously required after the success of the LBT. Therefore, an actual transmission timing of the SSB can differ every time among the transmission candidate positions of the SSB according to the success or failure of the LBT. For this reason, if the terminal accurately recognizes a QCL, it is not necessary to perform SSB measurement at all the SSB candidate positions, and the terminal only needs to perform measurement at only a place where the QCL is the same.

In addition, in a case of the NR-U, as described later, relevance between the SSB and the quasi co-location (QCL) is determined by a predetermined calculation method.

Note that the QCL is that two antenna ports are quasi co-located, for example, when characteristics of a channel carrying a symbol on one antenna port can be estimated from a channel carrying a symbol on the other antenna port. The QCL may be referred to as quasi co-location.

(2) Functional block configuration of radio communication system

Next, a functional block configuration of the radio communication system 10 will be described. Specifically, a functional block configuration of the UE 200 will be described.

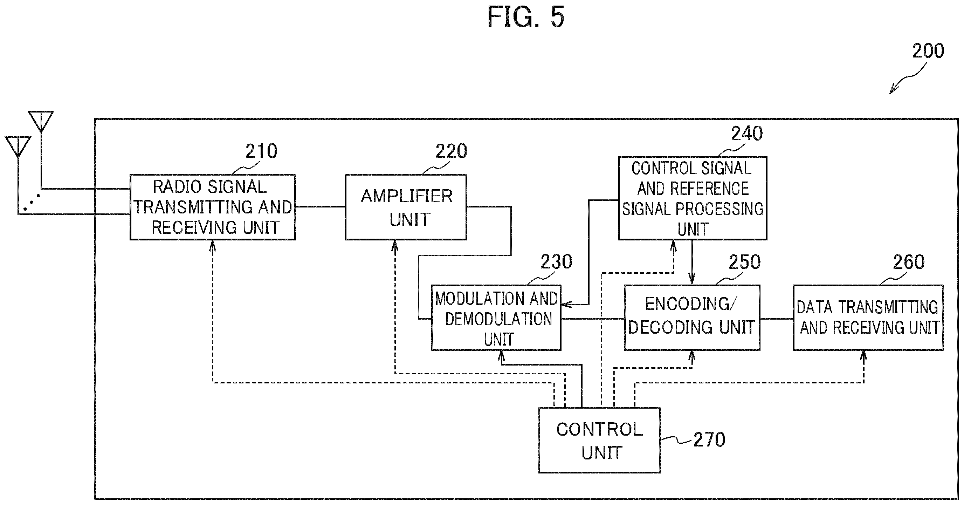

Fig. 5 is a functional block diagram of the UE 200. As illustrated in Fig. 5, the UE 200 includes a radio signal transmission/reception unit 210, an amplifier unit 220, a modulation/demodulation unit 230, a control signal/reference signal processing unit 240, an encoding/decoding unit 250, a data transmission/reception unit 260, and a control unit 270.

The radio signal transmission/reception unit 210 transmits and receives a radio signal according to NR. The radio signal transmission/reception unit 210 supports massive MIMO, CA that bundles and uses a plurality of CCs, DC that simultaneously performs communication between the UE and each of two NG-RAN nodes, and the like.

In the present embodiment, the radio signal transmission/reception unit 210 configures a reception unit that receives an SSB from the gNB 100. Specifically, the radio signal transmission/reception unit 210 receives one or more SSBs included in the slot (see Fig. 2).

In addition, the radio signal transmission/reception unit 210 can also receive information indicating the number of SSBs included in the slot. Specifically, the radio signal transmission/reception unit 210 can receive the number (1 or 2) of search space sets per slot of the four least significant bits (searchSpaceZero) of pdcch-ConfigSIB1 included in the MIB, as described above. Alternatively, the radio signal transmission/reception unit 210 can receive M (1 or 1/2) of searchSpaceZero.

Note that the radio signal transmission/reception unit 210 can also receive an SSB candidate position index included in searchSpaceZero.

The amplifier unit 220 is configured with a power amplifier (PA), a low noise amplifier (LNA) and the like. The amplifier unit 220 amplifies a signal output from the modulation/demodulation unit 230 to a predetermined power level. In addition, the amplifier unit 220 amplifies a radio frequency (RF) signal output from the radio signal transmission/reception unit 210.

The modulation/demodulation unit 230 executes data modulation/demodulation, transmission power configuration, resource block allocation, and the like, for each predetermined communication destination (gNB 100 or another gNB).

The control signal/reference signal processing unit 240 executes processing regarding various control signals transmitted and received by the UE 200 and processing regarding various reference signals transmitted and received by the UE 200.

Specifically, the control signal/reference signal processing unit 240 receives various control signals transmitted from the gNB 100 via a predetermined control channel, for example, control signals of a radio resource control layer (RRC). In addition, the control signal/reference signal processing unit 240 transmits various control signals to the gNB 100 via a predetermined control channel.

In addition, the control signal/reference signal processing unit 240 executes processing using a reference signal (RS) such as a demodulation reference signal (DMRS) and a phase tracking reference signal (PTRS).

The DMRS is a terminal specific known reference signal (pilot signal) between a base station and a terminal for estimating a fading channel used for data demodulation. The PTRS is a terminal specific reference signal for the purpose of estimating phase noise, which is a problem in a high frequency band.

Note that the reference signal includes a channel state information-reference signal (CSI-RS) and a sounding reference signal (SRS), in addition to the DMRS and the PTRS. Furthermore, the reference signal also includes the RLM-RS, as described above.

In addition, the channel includes a control channel and a data channel. The control channel includes a physical downlink control channel (PDCCH), a physical uplink control channel (PUCCH), a physical random access channel (PRACH), a physical broadcast channel (PBCH), and the like.

In addition, the data channel includes a physical downlink shared channel (PDSCH), a physical uplink shared channel (PUSCH), and the like. The data means data transmitted via the data channel.

The encoding/decoding unit 250 executes data division/connection, channel coding/decoding, and the like for each predetermined communication destination (gNB 100 or another gNB).

Specifically, the encoding/decoding unit 250 divides data output from data transmission/reception unit 260 into a predetermined size, and executes channel coding for the divided data. In addition, the encoding/decoding unit 250 decodes data output from the modulation/demodulation unit 230 and connects the decoded data to each other.

The data transmission/reception unit 260 executes transmission/reception of a protocol data unit (PDU) and a service data unit (SDU). Specifically, the data transmission/reception unit 260 executes assembling and disassembling of the PDU/SDU in a plurality of layers (a medium access control layer (MAC), a radio link control layer (RLC), a packet data convergence protocol layer (PDCP), and the like). In addition, the data transmission/reception unit 260 executes error correction and retransmission control of data based on a hybrid automatic repeat request (ARQ).

A control unit 270 controls each functional block constituting the UE 200. In particular, in the present embodiment, the control unit 270 executes control regarding the NR-U.

Specifically, the control unit 270 executes control regarding an assumption of the relevance between the SSB and the QCL in the NR-U. In a case of the NR-U, the control unit 270 calculates the QCL (Q) associated with the SSB based on a DMRS sequence (A) and an SSB position index (identification information of a position of the synchronization signal block).

In the present embodiment, the control unit 270 can apply a different calculation method of the QCL according to the number (specifically, one or two) of SSBs included in the slot. That is, the control unit 270 can switch the calculation method (which may be replaced with a calculating method, a determination method, an assumption method, or the like) of the QCL according to the number of SSBs included in the slot.

In addition, the slot may be replaced with a subframe or a predetermined number of symbols (which may be orthogonal frequency division multiplexing (OFDM) symbols).

The control unit 270 may apply a different calculation method of the QCL based on the number of SSBs included in the slot and the number of QCLs. In the NR-U, Q = 1, 2, 4, 8 is defined as the number of QCLs (Q). However, a value of Q is not necessarily limited to these values.

In the present embodiment, when the number of SSBs included in the slot is one and Q=8, the control unit 270 applies a calculation method of the QCL different from a calculation method of the QCL applied to combinations other than this combination.

Specifically, when only one SSB is included in the slot, the control unit 270 can calculate the QCL based on identification information of a position of the SSB, that is, an SSB position index and the number of QCLs.

In addition, the control unit 270 may determine the number of SSBs included in the slot based on information indicating the number of SSBs received by the radio signal transmission/reception unit 210. Specifically, the control unit 270 determines the number of SSBs included in the slot by using information included in searchSpaceZero.

Note that a specific calculation method of the QCL according to the number of SSBs included in the slot will further be described later.

(3) Operation of radio communication system

Next, an operation of the radio communication system 10 will be described. Specifically, an operation of calculating the QCL associated with the SSB by the UE 200 in the NR-U will be described.

(3.1) Basic operation

In the NR-U, in order to derive the QCL associated with the SSB, 1, 2, 4, and 8 are supported as a value of Q.

In addition, the maximum number (= 8) of PBCH DMRS sequences used in a cell (serving cell or neighboring cell) has not changed from 3GPP Release 15. Note that the number of PBCH DMRS sequences (may be simply referred to as DMRS sequences) used in the cell does not depend on Q.

The three least significant bits (LSB) of the SSB candidate position index are represented by an index of the DMRS sequence.

In addition, when the terminal (UE 200) recognizes the value of Q, the terminal assumes discovery reference signal (DRS) transmission having modulo (A, Q) having the same value or relevance of a QCL between SSBs within a measurement window. Note that A is the DMRS sequence.

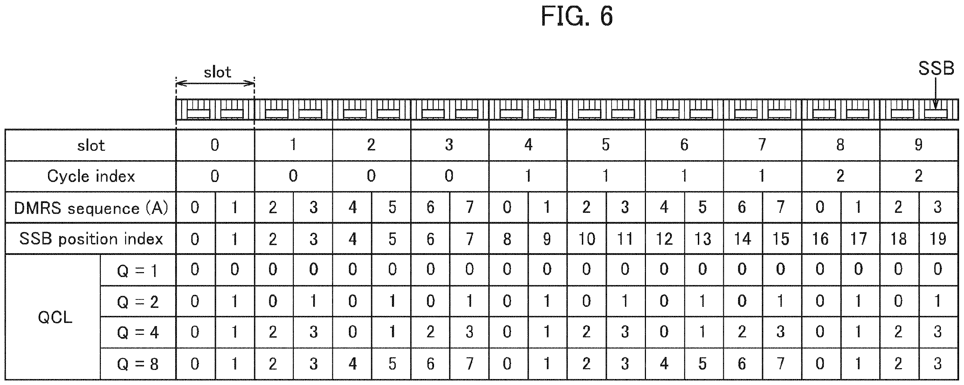

Fig. 6 illustrates an example of a correspondence relationship between SSBs and QCLs (Q) in NR-U. Specifically, Fig. 6 illustrates values of QCLs as a function of Q when SCS = 30 kHz. More specifically, when QCLs for Q = 1, 2, 4, 8 are derived according to the basic operation regarding derivation of the QCL as described above, a derivation result as illustrated in Fig. 6 is obtained.

As illustrated in Fig. 6, when two SSBs are included in one slot, a different QCL is allocated to each transmission SSB in all cases where the number of transmission SSBs is 1 to 8.

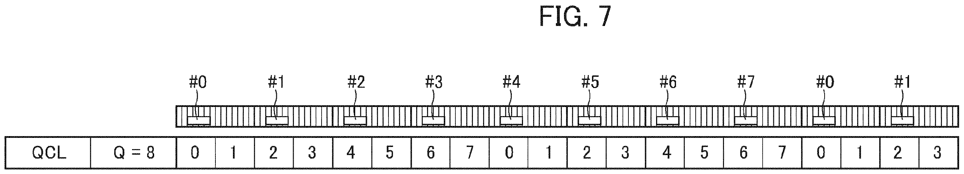

Fig. 7 illustrates another example of a correspondence relationship between SSBs and QCLs (Q) in NR-U. Specifically, Fig. 7 illustrates SSB indices and values of QCLs when SCS = 30 kHz, Q = 8, and only one SSB is allocated to the slot.

As illustrated in Figure 7, in a case where only one SSB is allocated to the slot (SSBs are allocated to places (see Fig. 6) where the SSB position indices are even numbers), when the number of transmitted SSBs is 5, 6, 7, or 8, a different QCL cannot be allocated to each transmitted SSB. For example, when the number of transmitted SSBs is 8 (SSB index #0 to #7), a different QCL cannot be allocated to each transmitted SSB.

Specifically, even though Q=8 is selected, QCL = 0 can be allocated to SSB #0 and SSB #4, QCL = 1 can be allocated to SSB #1 and SSB #5, and QCL = 2 can be allocated to SSB #2 and SSB #6, QCL = 3 can be allocated to SSB #3 and SSB #7, but different QCLs cannot be allocated to the transmitted SSBs, respectively.

Hereinafter, an operation example that can solve such a defect will be described.

(3.2) Operation example

In the present operation example, a calculation equation of a QCL is switched according to the number of SSBs actually transmitted in one slot.

The number of SSBs actually transmitted in one slot can be implicitly or explicitly notified based on information transmitted from the network, specifically, the gNB 100, and can be determined by the terminal (UE 200).

As the implicit notification, as described above, the number (1 or 2) of search space sets per slot in search-SpaceZero of pdcch-ConfigSIB1 or M (1 or 1/2 in searchSpaceZero can be used. In addition, as the explicit notification, for example, the SSB candidate position index (name may be different) in searchSpaceZero can be used.

Note that in the implicit or explicit notification, searchSpaceZero of pdcch-ConfigSIB1 may not be necessarily used, and other information elements (IEs) or fields included in the SIB may be used.

The terminal determines a calculation equation to be used using the number of SSBs actually transmitted in one slot and the value of Q. Specifically, when the number of SSBs actually transmitted in one slot is one and Q = 8, a calculation equation using the SSB position index and Q is used. On the other hand, in other cases, a calculation equation using the DMRS sequence and Q is used. That is, the calculation equation of the QCL is switched according to the number of SSBs transmitted in the slot.

Hereinafter, a specific operation example will be described.

(3.2.1) Operation example 1

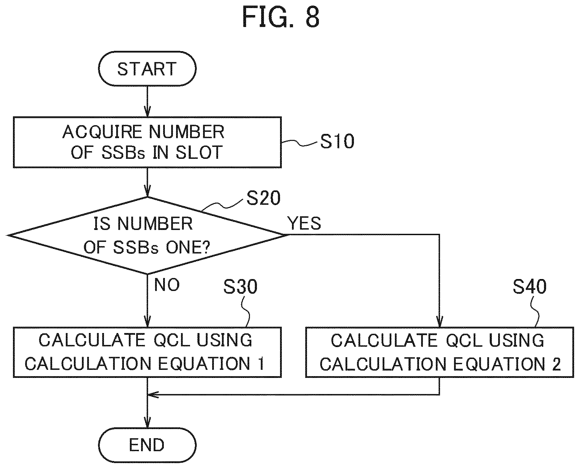

Fig. 8 illustrates a calculation flow of a QCL according to operation example 1. The calculation flow illustrated in Fig. 8 is executed by the terminal (UE 200).

As illustrated in Fig. 8, the UE 200 acquires the number of SSBs in the slot (S10). Specifically, the UE 200 acquires the number of SSBs in the slot by the implicit or explicit notification described above from the network.

The UE 200 assumes (which may be replaced with judging, determining, deciding, or the like) that the number (1 or 2) of search spaces of a PDCCH in one slot is the same as the number of SSBs actually transmitted in one slot. Specifically, the UE 200 acquires the number of SSBs in the slot based on the number (1 or 2) of search space sets per slot or M (1 or 1/2) in searchSpaceZero.

Alternatively, the UE 200 may receive the SSB candidate position index in searchSpaceZero and acquire the number of SSBs in the slot based on a value of the SSB candidate position index, as described above.

The UE 200 determines whether or not only one SSB is included in one slot, based on the acquired number of SSBs (S20).

When the number of SSBs included in one slot is plural (two), the UE 200 calculates the QCL associated with the SSB using Calculation Equation 1 (S30). Specifically, the UE 200 calculates the QCL using Equation 1.

$$QCL = modulo(DMRS\ sequence,\ Q)\ ...\ (Equation\ 1)$$

On the other hand, when the number of SSBs included in one slot is one, the UE 200 calculates the QCL associated with the SSB using Calculation Equation 2 (S40).

Specifically, when the UE 200 performs calculation at only a place where the SSB position index is even, the UE 200 calculates the QCL using Equation 2-1.

$$QCL = modulo(SSB\ position\ index,\ 2 \times Q)/2\ ...\ (Equation\ 2-1)$$

In addition, the UE 200 performs calculation regardless of the value of the SSB position index, and calculates the QCL using Equation 2-2 when a value of the QCL at a place where the SSB position index is odd is an integer.

$$QCL = floor(modulo(SSB\ position\ index,\ 2 \times Q)/2)\ ...$$

$$(Equation\ 2\text{-}2)$$

(3.2.2) Operation example 2

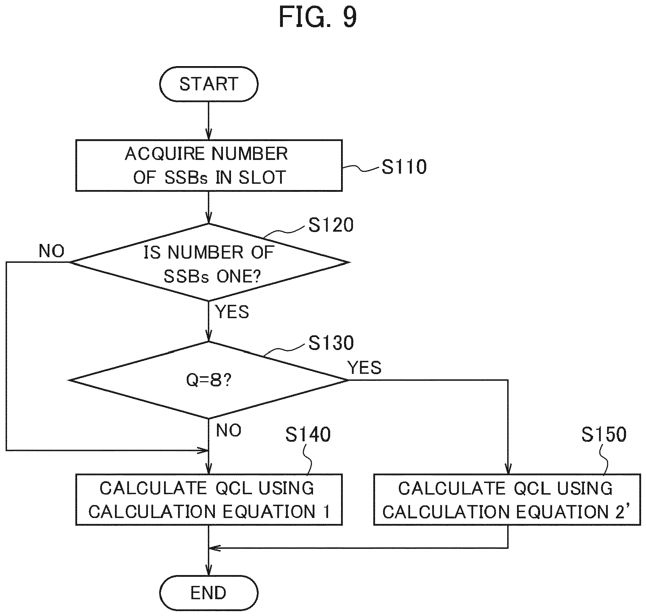

Fig. 9 illustrates a calculation flow of a QCL according to operation example 2. Hereinafter, parts different from those of operation example 1 will be mainly described.

Operations of S110 and S120 are the same as those of S10 and S20 of operation example 1. When one SSB is included in one slot, the UE 200 determines whether or not a value of Q is 8 (S130).

When the number of SSBs included in one slot is plural (two) or when the value of Q is other than 8, that is, Q = 1, 2, or 4, the UE 200 calculates the QCL associated with the SSB using Calculation Equation 1 (S140). Specifically, UE 200 calculates QCL using Equation 1, similar to operation example 1.

On the other hand, when the number of SSBs included in one slot is one and the value of Q is 8, the UE 200 calculates the QCL associated with the SSB using Calculation Equation 2' (S150).

Specifically, when the UE 200 performs calculation at only a place where the SSB position index is even, the UE 200 calculates the QCL using Equation 2'-1.

$$QCL = modulo(SSB\ position\ index,\ 16)/2\ ...\ (Equation$$

$$2'\text{-}1)$$

In addition, the UE 200 performs calculation regardless of the value of the SSB position index, and calculates the QCL using Equation 2'-2 when a value of the QCL at a place where the SSB position index is odd is an integer

$$QCL = floor(modulo(SSB\ position\ index,\ 16)/2)\ ...$$

$$(Equation\ 2'\text{-}2)$$

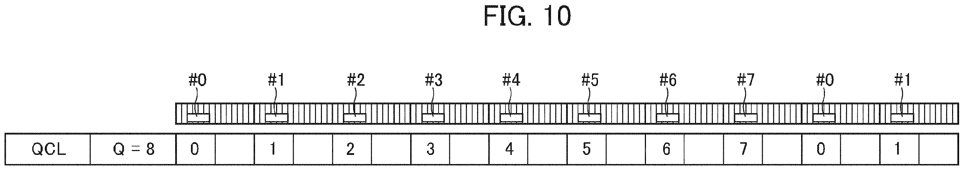

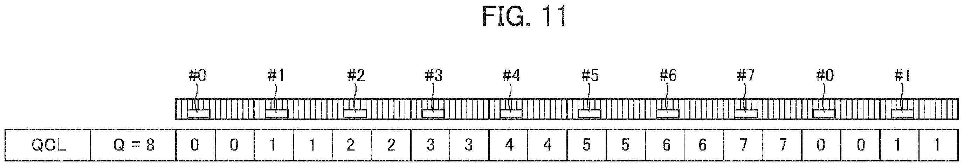

Figs. 10 and 11 illustrate examples of correspondence relations between SSBs and QCLs (Q) according to operation example 2. Specifically, Fig. 10 illustrates an example of a correspondence relationship between SSBs and QCLs (Q) corresponding to Equation 2'-1, and Fig. 11 illustrates an example of a correspondence relationship between SSBs and QCLs (Q) corresponding to Equation 2'-2.

As illustrated in Figs. 10 and 11, even when the number of SSBs included in one slot is one (see SSB #0 to #7 in the figures) and Q = 8 (that is, a value of 0 to 7 can be taken), it is possible to associate (allocate) different QCLs to the SSBs to be transmitted, respectively, by using Calculation Equation 2 described above, specifically, Equation 2'-1 or Equation 2'-2.

(4) Action and effect

According to the embodiment described above, the following actions and effects can be obtained. Specifically, the UE 200 can apply different calculation methods of the quasi co-location (QCL) according to the number of SSBs included in the slot, in the NR-U. For this reason, the UE 200 can assume an appropriate QCL associated with the SSB, regardless of the number of SSBs transmitted in the slot. More specifically, it becomes possible to always allocate a different QCL to each SSB regardless of the number of SSBs included in the slot, such that it is possible to improve radio communication quality of the entire radio communication system 10, particularly, good connectivity with a network.

In the present embodiment, the UE 200 may apply a different calculation method of the QCL based on the number of SSBs included in the slot and the number (Q) of QCLs. For this reason, the UE 200 can assume an appropriate QCL according to the number of QCLs.

In the present embodiment, when only one SSB is included in the slot, the QCL can be calculated based on the SSB position index (identification information of the position of the SSB) and the number (Q) of QCLs. For this reason, the UE 200 can assume a more appropriate QCL based on the SSB position index.

In the present embodiment, the UE 200 can determine the number of SSBs included in the slot based on the information indicating the number of SSBs implicitly or explicitly notified from the network. For this reason, an appropriate QCL based on the number of SSB included in the slot can be more certainly and quickly assumed.

(5) Other embodiments

Although the contents of the present invention have been described hereinabove with reference to the embodiments, it is obvious to those skilled in the art that the present invention is not limited to these descriptions, and can be variously modified and improved.

For example, the unlicensed frequency band may be referred to by a different name. For example, terms such as License-exempt or Licensed-Assisted Access (LAA) may be used.

Moreover, the block diagram used for explaining the embodiments (Fig. 5) illustrates blocks of functional unit. Those functional blocks (structural components) can be realized by a desired combination of at least one of hardware and software. Method for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (structural component) that causes transmitting may be called a transmitting unit or a transmitter. For any of the above, as explained above, the realization method is not particularly limited to any one method.

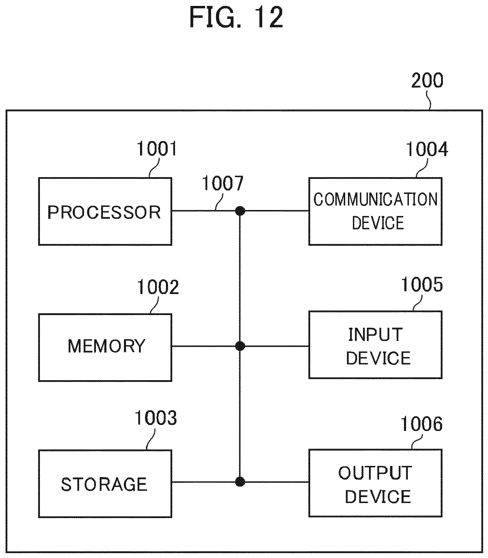

Furthermore, the UE 200 explained above can function as a computer that performs the processing of the radio communication method of the present disclosure. Fig. 12 is a diagram illustrating an example of a hardware configuration of the UE 200. As illustrated in Fig. 12, the UE 200 can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices illustrated in the figure, or can be constituted by without including a part of the devices.

The functional blocks (see Fig. 5) of the UE 200 can be realized by any of hardware elements of the computer device or a combination of the hardware elements.

Moreover, the processor 1001 performs operation by loading a predetermined software (program) on hardware such as the processor 1001 and the memory 1002, and realizes various functions of the UE 200 by controlling communication via the communication device 1004, and controlling at least one of reading and writing of data on the memory 1002 and the storage 1003.

The processor 1001, for example, operates an operating system to control the entire computer. The processor 1001 can be configured with a central processing unit (CPU) including an interface with a peripheral device, a control device, an operation device, a register, and the like.

Moreover, the processor 1001 reads a program (program code), a software module, data, and the like from at least one of the storage 1003 and the communication device 1004 into the memory 1002, and executes various types of processing according to the data. As the program, a program that is capable of executing on the computer at least a part of the operation explained in the above embodiments is used. Alternatively, various types of processing explained above can be executed by one processor 1001 or can be executed simultaneously or sequentially by two or more processors 1001. The processor 1001 can be implemented by using one or more chips. Alternatively, the program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main memory), and the like. The memory 1002 can store therein a program (program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information thereamong. The bus 1007 can be constituted by a single bus or can be constituted by separate buses between the devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these types of hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), higher layer signaling (for example, RRC signaling, Medium Access Control (MAC) signaling, broadcast information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information and signals (information and the like) can be output from a higher layer (or lower layer) to a lower layer (or higher layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, optical fiber cable, twisted pair, Digital Subscriber Line (DSL), or the like) and a wireless technology (infrared light, microwave, or the like), at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of a channel and a symbol may be a signal (signaling). Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of at least one of a base station and a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows a communication between a base station and a mobile station to be replaced with a communication between a plurality of mobile stations (for example, may be referred to as Device-to-Device (D2D), Vehicle-to-Everything (V2X), or the like). In this case, the mobile station may have the function of the base station. Words such as "uplink" and "downlink" may also be replaced with wording corresponding to inter-terminal communication (for example, "side"). For example, terms such as an uplink channel and a downlink channel may be read as a side channel.

Likewise, a mobile station in the present disclosure may be read as a base station. In this case, the base station may have the function of the mobile station.

A radio frame may be configured with one or a plurality of frames in a time domain. One frame or each of the plurality of frames in the time domain may be referred to as a subframe.

The subframe may also be configured with one or a plurality of slots in the time domain. The subframe may have a fixed time length (for example, 1 ms) that does not depend on a numerology.

The numerology may be a communication parameter applied to at least one of transmission and reception of a certain signal or channel. The numerology may indicate at least one of, for example, a subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, a specific windowing processing performed by the transceiver in the time domain, and the like.

The slot may be configured with one or a plurality of symbols (Orthogonal Frequency Division Multiplexing (OFDM) symbols, Single Carrier Frequency Division Multiple Access (SC-FDMA) symbols, or the like) in the time domain. The slot may be a time unit based on a numerology.

The slot may include a plurality of minislots. Each minislot may be configured with one or a plurality of symbols in the time domain. In addition, the minislot may be referred to as a sub-slot. The minislot may be configured with a smaller number of symbols than that of the slot. A PDSCH (or PUSCH) transmitted in a time unit larger than the minislot may be referred to as PDSCH (or PUSCH) mapping type A. A PDSCH (or PUSCH) transmitted using the minislot may be referred to as PDSCH (or PUSCH) mapping type B.

All of the radio frame, the subframe, the slot, the minislot, and the symbol represent time units at the time of transmitting a signal. The radio frame, the subframe, the slot, the minislot, and the symbol may have different names corresponding thereto, respectively.

For example, one subframe may be referred to as a transmission time interval (TTI), a plurality of consecutive subframes may be referred to as a TTI, and one slot or one minislot may be referred to as a TTI. That is, at least one of the subframe and the TTI may be a subframe (1 ms) in the existing LTE, may be a period (for example, one to thirteen symbols) shorter than 1 ms, or may be a period longer than 1 ms. Note that a unit representing the TTI may be referred to as a slot, a minislot, or the like rather than the subframe.

Here, the TTI refers to, for example, a minimum time unit of scheduling in radio communication. For example, in an LTE system, a base station performs scheduling that allocates radio resources (frequency bandwidths, transmission power, and the like, that can be used in each user terminal) to each user terminal in a unit of the TTI. Note that a definition of the TTI is not limited thereto.

The TTI may be a transmission time unit such as a channel-encoded data packet (transport block), a code block and a codeword, or may be a processing unit such as scheduling and link adaptation. Note that when the TTI is given, a time section (for example, the number of symbols) in which the transport block, the code block, the codeword, or the like is actually mapped may be shorter than the TTI.

Note that in a case where one slot or one minislot is referred to as the TTI, one or more TTIs (that is, one or more slots or one or more minislots) may be a minimum time unit of scheduling. In addition, the number of slots (number of minislots) constituting the minimum time unit of the scheduling may be controlled.

A TTI having a time length of 1 ms may be referred to as a normal TTI (TTI in LTE Rel. 8-12), a normal TTI, a long TTI, a normal subframe, a normal subframe, a long subframe, a slot, and the like. A TTI shorter than the normal TTI may be referred to as a shortened TTI, a short TTI, a partial or fractional TTI, a shortened subframe, a short subframe, a minislot, a subslot, a slot, and the like.

Note that the long TTI (for example, a normal TTI, a subframe or the like) may be replaced with a TTI having a time length exceeding 1 ms and the short TTI (for example, a shortened TTI or the like) may be replaced with a TTI having a TTI length shorter than that of the long TTI and having a TTI length of 1 ms or more.

A resource block (RB) is a resource allocation unit in the time domain and the frequency domain, and may include one or a plurality of continuous subcarriers in the frequency domain. The number of subcarriers included in the RB may be the same regardless of the numerology, and may be, for example, 12. The number of subcarriers included in the RB may be determined based on the numerology.

In addition, the time domain of the RB may include one or a plurality of symbols, and may have a length of one slot, one minislot, one subframe, or one TTI. One TTI, one subframe, and the like may each be configured with one or a plurality of resource blocks.

Note that one or a plurality of RBs may be referred to as a physical resource block (Physical RB: PRB), a subcarrier group (Sub-Carrier Group: SCG), a resource element group (Resource Element Group: REG), a PRB pair, an RB pair, and the like.

In addition, the resource block may be configured with one or a plurality of resource elements (Resource Elements: RE). For example, one RE may be a radio resource area of one subcarrier and one symbol.

A bandwidth part (Bandwidth Part: BWP) (which may be referred to as a partial bandwidth or the like) may represent a subset of contiguous common resource blocks (RBs) for a certain numerology in a certain carrier. Here, the common RB may be specified by an index of RBs based on a common reference point of the carrier. The PRB may be defined in a certain BWP and be numbered within the BWP.

The BWP may include an UL BWP and a DL BWP. For the UE, one or a plurality of BWPs may be configured in one carrier.

At least one of the configured BWPs may be active, and it may not be assumed that the UE transmits and receives a predetermined signal/channel outside the active BWP. Note that a "cell", a "carrier", or the like in the present disclosure may be replaced with the "BWP".

The structures of the radio frame, the subframe, the slot, the minislot, the symbol, and the like, described above are merely examples. For example, a configuration such as the number of subframes included in the radio frame, the number of slots per subframe or radio frame, the number of minislots included in the slot, the number of symbols and RBs included in the slot or the minislot, the number of subcarriers included in the RB, the number of symbols in the TTI, the symbol length, and the cyclic prefix (CP) length can be variously changed.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using at least one of one or more wires, cables and printed electrical connections, and as some nonlimiting and non-exhaustive examples, by using electromagnetic energy having wavelengths in the radio frequency domain, the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each of the above devices may be replaced with a "unit", a "circuit" a, "device", and the like.

Any reference to an element using a designation such as "first" and "second" used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as "a", "an", and "the" in English are added, in this disclosure, these articles shall include a plurality of nouns following these articles.

The terms "determining" as used in this disclosure may encompass a wide variety of operations. The "determining" can include, for example, considering performing judging, calculating, computing, processing, deriving, investigating, looking up, search, or inquiry (for example, searching in a table, a database, or another data structure), or ascertaining as performing the "determining". In addition, the "determining" can include considering performing receiving (for example, receiving information), transmitting (for example, transmitting information), input, output, or accessing (for example, accessing data in a memory) as performing the "determining". In addition, the "determining" can include considering performing resolving, selecting, choosing, establishing, or comparing as performing the "determining". That is, the "determining" can include considering some operations as performing the "determining". In addition, the "determining" may be replaced with "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

Reference Signs List

| | |
|---|---|
| 10 | Radio communication system |
| 20 | NG-RAN |
| 100 | gNB |
| 200 | UE |
| 210 | Radio signal transmission/reception unit |
| 220 | Amplifier unit |
| 230 | Modulation/demodulation unit |

240     Control signal/reference signal processing unit
250     Encoding/decoding unit
260     Data transmission/reception unit
270     Control unit
1001    Processor
1002    Memory
1003    Storage
1004    Communication device
1005    Input device
1006    Output device
1007    Bus

**Claims**

1.  A terminal comprising:

    a reception unit that receives a synchronization signal block from a radio base station; and
    a control unit that calculates a quasi co-location associated with the synchronization signal block,
    wherein the control unit applies a different calculation method of the quasi co-location according to the number of synchronization signal blocks included in a slot.

2.  The terminal according to claim 1, wherein the control unit applies a different calculation method of the quasi co-location based on the number of synchronization signal blocks included in the slot and the number of quasi co-locations.

3.  The terminal according to claim 1, wherein the control unit calculates the quasi co-location based on identification information of a position of the synchronization signal block and the number of quasi co-locations when only one synchronization signal block is included in the slot.

4.  The terminal according to claim 1, wherein the reception unit receives information indicating the number of synchronization signal blocks included in the slot, and
    the control unit determines the number of synchronization signal blocks included in the slot based on the information indicating the number of synchronization signal blocks.

# FIG. 1

FIG. 2

# FIG. 3

# FIG. 4

SYNCHRONIZATION SIGNAL

PBCH

freq

10ms  10ms  10ms      10ms  10ms  10ms

5ms

SSB Index
(CORRESPONDING TO EACH BEAM)

0  1  2  3  4  5  6  7  BM

EP 4 040 866 A1

# FIG. 5

FIG. 6

| slot | | 0 | | 1 | | 2 | | 3 | | 4 | | 5 | | 6 | | 7 | | 8 | | 9 | |
|---|---|---|---|---|---|---|---|---|---|---|---|---|---|---|---|---|---|---|---|---|---|
| Cycle index | | 0 | | 0 | | 0 | | 0 | | 1 | | 1 | | 1 | | 1 | | 2 | | 2 | |
| DMRS sequence (A) | | 0 | 1 | 2 | 3 | 4 | 5 | 6 | 7 | 0 | 1 | 2 | 3 | 4 | 5 | 6 | 7 | 0 | 1 | 2 | 3 |
| SSB position index | | 0 | 1 | 2 | 3 | 4 | 5 | 6 | 7 | 8 | 9 | 10 | 11 | 12 | 13 | 14 | 15 | 16 | 17 | 18 | 19 |
| QCL | Q = 1 | 0 | 0 | 0 | 0 | 0 | 0 | 0 | 0 | 0 | 0 | 0 | 0 | 0 | 0 | 0 | 0 | 0 | 0 | 0 | 0 |
| | Q = 2 | 0 | 1 | 0 | 1 | 0 | 1 | 0 | 1 | 0 | 1 | 0 | 1 | 0 | 1 | 0 | 1 | 0 | 1 | 0 | 1 |
| | Q = 4 | 0 | 1 | 2 | 3 | 0 | 1 | 2 | 3 | 0 | 1 | 2 | 3 | 0 | 1 | 2 | 3 | 0 | 1 | 2 | 3 |
| | Q = 8 | 0 | 1 | 2 | 3 | 4 | 5 | 6 | 7 | 0 | 1 | 2 | 3 | 4 | 5 | 6 | 7 | 0 | 1 | 2 | 3 |

EP 4 040 866 A1

EP 4 040 866 A1

# FIG. 7

| QCL | Q = 8 | 0 | 1 | 2 | 3 | 4 | 5 | 6 | 7 | 0 | 1 | 2 | 3 | 4 | 5 | 6 | 7 | 0 | 1 | 2 | 3 |
|-----|-------|---|---|---|---|---|---|---|---|---|---|---|---|---|---|---|---|---|---|---|---|

# FIG. 8

START

↓

ACQUIRE NUMBER
OF SSBs IN SLOT — S10

↓

IS NUMBER
OF SSBs ONE? — S20

YES →

NO ↓ S30

CALCULATE QCL USING
CALCULATION EQUATION 1

CALCULATE QCL USING
CALCULATION EQUATION 2 — S40

↓

END

# FIG. 9

START

ACQUIRE NUMBER
OF SSBs IN SLOT — S110

S120
NO — IS NUMBER OF
SSBs ONE?
YES

S130
Q=8? — YES

NO    S140    S150

CALCULATE QCL USING
CALCULATION EQUATION 1

CALCULATE QCL USING
CALCULATION EQUATION 2'

END

EP 4 040 866 A1

FIG. 10

24

# FIG. 11

| QCL | Q = 8 | 0 | 0 | 1 | 1 | 2 | 2 | 3 | 3 | 4 | 4 | 5 | 5 | 6 | 6 | 7 | 7 | 0 | 0 | 1 | 1 |
|-----|-------|---|---|---|---|---|---|---|---|---|---|---|---|---|---|---|---|---|---|---|---|

#0  #1  #2  #3  #4  #5  #6  #7  #0  #1

# FIG. 12

200

1001

| PROCESSOR |
|---|

1007

1004

| COMMUNICATION DEVICE |
|---|

1002

| MEMORY |
|---|

1005

| INPUT DEVICE |
|---|

1003

| STORAGE |
|---|

1006

| OUTPUT DEVICE |
|---|

**EP 4 040 866 A1**

| INTERNATIONAL SEARCH REPORT | International application No. |
|---|---|
| | PCT/JP2019/039207 |

**A. CLASSIFICATION OF SUBJECT MATTER**

H04W 56/00(2009.01)i
FI: H04W56/00 130

According to International Patent Classification (IPC) or to both national classification and IPC

**B. FIELDS SEARCHED**

Minimum documentation searched (classification system followed by classification symbols)
H04W4/00-99/00

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | QUALCOMM INCORPORATED, Initial access and mobility procedures for NR unlicensed[online], 3GPP TSG RAN WG1 #98 R1-1909246, 30 August 2019, Internet<URL:https://www.3gpp.org/ftp/tsg_ran/WG1_RL1/TSGR1_98/Docs/R1-1909246.zip> section 2.1.1 | 1-4 |
| A | QUALCOMM INCORPORATED, Initial access signals and channels for NR-U[online], 3GPP TSG RAN WG1 #97 R1-1907258, 17 May 2019, Internet<URL:https://www.3gpp.org/ftp/tsg_ran/WG1_RL1/TSGR1_97/Docs/R1-1907258.zip> section 2.1 | 1-4 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 April 2020 (22.04.2020) | 12 May 2020 (12.05.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2019/039207

C (Continuation).   DOCUMENTS CONSIDERED TO BE RELEVANT

| Category* | Citation of document, with indication, where appropriate, of the relevant passages | Relevant to claim No. |
|---|---|---|
| A | SPREADTRUM COMMUNICATIONS, Discussion on initial access and mobility in NR-U[online], 3GPP TSG RAN WG1 #96b R1-1904801, 12 April 2019, Internet<URL:https://www.3gpp.org/ftp/tsg_ran/WG1_RL1/TSGR1_96b/Docs/R1-1904801.zip> section 2.5 | 1-4 |
| Y | QUALCOMM INCORPORED, Initial access and mobility procedures for NR unlicensed[online], 3GPP TSG RAN WG1 #98b R1-1911098, 20 October 2019, Internet<URL:https://www.3gpp.org/ftp/tsg_ran/WG1_RL1/TSGR1_98b/Docs/R1-1911098.zip> section 2.1.1 | 1-4 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- 3rd Generation Partnership Project; Technical Specification Group Radio Access Network; Study on NR-based access to unlicensed spectrum (Release 16), 3GPP. *3GPP TR 38.889 V16.0.0,* December 2018

- Feature lead summary #1 of Enhancements to initial access procedure. *R1-1909454, 3GPP TSG RAN WG1 Meeting #98, 3GPP,* August 2019